# EUROPEAN PATENT APPLICATION

(11) **EP 4 484 103 A1**
(43) Date of publication of application: **01.01.2025**
(21) Application number: 23181823.8
(22) Date of filing: 27.06.2023
(51) Int. Cl.: B29B 7/72, B29B 7/84, B29B 9/12, B29B 9/16, B29C 48/00, B29B 7/82, C08J 3/00, C08J 9/00, C08L 3/00, B29B 7/48, B29B 9/06, B29B 7/88

(54) **METHOD OF EXTRUDING A WATER-CONTAINING POLYMER**

(71) Applicant: Covestro Deutschland AG, 51373 Leverkusen (DE)
(72) Inventor: The designation of the inventor has not yet been filed
(74) Representative: Levpat

(57) **Abstract**

A method for extruding a polymer comprises the steps of providing, in an extruder, a particulate polymer starting material, the particulate polymer starting material comprising a polymer and water, and extruding, using the extruder, the provided polymer starting material through at least one nozzle of the extruder, thereby obtaining an extruded polymer material. The polymer of the polymer starting material is selected such that in a second heating curve of a differential scanning calorimetry measurement of the polymer, the measurement being according to DIN EN ISO 11357 and at a heating rate of 20 K/min, the highest end temperature T_{ef} for a phase transition of the polymer is ≥-60°C and ≤110°C, with T_{ef} being defined in accordance with DIN EN ISO 11357. The polymer starting material has a water content of ≥3 weight-% to ≤35 weight-% based on the total weight of the polymer starting material, and the temperature of the extruded polymer material is ≥30°C to ≤100°C.

## Description

The present invention relates to a method for extruding a polymer comprising the step of providing, in an extruder, a particulate polymer starting material, the particulate polymer starting material comprising a polymer and water and the method further comprising the step of extruding, using the extruder, the polymer starting material through at least one nozzle of the extruder at an extrusion pressure and at a temperature of the extruded material, thereby obtaining an extruded polymer material.

Polymer dispersions can be freeze-coagulated in order to obtain the solid polymer material. For example, WO 2021/233749 A1 discloses a method of manufacturing a solids-incorporating polymer comprising the steps of: I) providing an aqueous polymer dispersion, the dispersion comprising crystallizing polyurethane particles having a mean particle size of ≤ 500 nm and further comprising inorganic particles; II) storing the dispersion of step I) at a temperature of ≤ 0 °C until a precipitate is formed; III) Isolating the precipitate of step II) and IV) removing water from the isolated precipitate of step III), thereby obtaining a water-depleted precipitate. The disclosure also relates to a solid particulate composition which is obtainable by the method and the use of the composition as a build material in additive manufacturing processes, as a coating, an adhesive or as a rubber.

WO 2019/158599 A1 relates to a method for applying a meltable polymer above its decomposition temperature. In the experimental section the freezing of certain Dispercoll^{®} U type polyurethane dispersions at -18 °C for 12 h, followed by filtering the precipitate, drying, sieving and extruding into a filament, is described. It is reported that the precipitate was dried in a drying cabinet with extractor suction at 30 °C over the course of 24 h.

US 2016/280809 A1 describes a continuous or semi-continuous freeze coagulation process for aqueous polymer dispersions, wherein said process comprises a freezing step and a solid-liquid separation step and is further characterized in that it comprises the further step of admixing water and/or water vapor between the freezing step and the solid-liquid separation step. It is reported that after passing through the solid-liquid separation step, the removed solid fraction (with residual moisture) may, in a preferred embodiment, be further processed directly under the optional admixture of further additives, in a compounding step, for example to perform an extrudate and/or a pellet material.

Polymer slurries can be subjected to extruder-based dewatering processes. US 6,517,335 discusses an apparatus and method for dewatering an elastomeric polymer. More specifically, the discosure is directed to an apparatus and method for dewatering a slurry of water and/or other liquids and elastomeric polymer, (e.g., ethylene propylene diene monomer rubber (EPDM), ethylenepropylene rubber (EPR), butyl rubber, halogenated butyl rubber and the like) in which the slurry is extruded through the barrel of a dewatering extruder, while the extruder conditions are continuously adjusted to provide a predetermined moisture content to the dewatered extrudate based on a real-time measurement of the water or moisture content of the elastomeric polymer within the extruder barrel. By controlling the moisture content of the elastomeric polymer based on the water or moisture content within the extruder barrel, a more efficient process can be achieved, and thus, a superior finished elastomeric polymer product, can reportedly be provided.

US 4,305,901 relates to a method of making elongate, extruded thermoplastic products comprising the steps of mixing together (1) thermoplastic resin, (2) fine inert material and (3) water, the quantities of such additives being such that from about 5% to about 60% of the solids is thermoplastic resin, from about 40% to about 95% of the solids is fine inert material and the amount of water is such that the mixture has an extrudable consistency, forcing the mixture through an opening in a machined extrusion die with a pressure of at least about 25 psi forming a uniform elongate extrusion of the extruded material, of a cross-section determined by said die cross-section, drying said elongate member and fusing said thermoplastic resin.

The present invention has the object of providing a method for extruding a polymer where the extruded polymer can be further processed, in particular into granules, which does not or not significantly degrade the technical properties of the polymer and which exhibits a favorable time and energy profile over the prior art methods.

Such a method is recited in claim 1. Advantageous embodiments are the subject of the dependent claims. They can be combined freely unless the context clearly indicates otherwise.

Accordingly a method for extruding a polymer comprises the steps:
a. providing, in an extruder, a particulate polymer starting material, the particulate polymer starting material comprising a polymer and water; and
b. extruding, using the extruder, the provided polymer starting material through at least one nozzle of the extruder, thereby obtaining an extruded polymer material.

In the method the polymer of the polymer starting material is selected such that in a second heating curve of a differential scanning calorimetry measurement of the polymer, the measurement being according to DIN EN ISO 11357 and at a heating rate of 20 K/min, the highest end temperature T_{ef} for a phase transition of the polymer is ≥ -60 °C and ≤ 110 °C. T_{ef} is defined in accordance with DIN EN ISO 11357: for a peak of the curve as the point of intersection of the interpolated virtual baseline and tangent drawn at the point of inflection of the far side of peak and for a step of the curve as the point of intersection of the extrapolated end baseline and a tangent drawn at the point of inflection of the step.

The provided polymer starting material has a water content of ≥ 3 weight-% to ≤ 35 weight-% based on the total weight of the polymer starting material and the temperature of the extruded polymer material is ≥ 30 °C to ≤ 100 °C.

It has been found that processing a "wet" starting material within the boundaries set by the method according to the invention a stable or coherent extrudate strand can be obtained. This strand can then be further processed into, for example, granules. The method according to the invention at least partially eliminates the need for time- and energy-intensive drying steps of the polymer starting material. Without wishing to be bound by theory it is believed that the water present in the starting material can serve as a lubricant and therefore facilitate the extrusion of stable strands of the polymer.

It has further been found that processing a "wet" starting material within the boundaries set by the method according to the invention the solution viscosity of the polymer after extrusion changes only by a very small amount. Without wishing to be bound by theory this solution viscosity behaviour is taken as a proxy for the absence of polymer degradation, in particular the absence of polymer hydrolysis.

The particulate polymer starting material may be obtained from the coagulation of an aqueous polymer dispersion. Commercially available dispersions or formulated dispersions which also include additives, fillers, pigments, plasticizers and adjuvants may be used. The coagulated material may be filtered from the supernatant liquid and processed with no or a minimum of extra drying. An example for a suitable d₉₀ particle size range for the particulate polymer starting material is ≥ 0.1 mm to ≤ 20 mm, preferably ≥ 1 mm to ≤ 5 mm. The particles of the particulate polymer may be agglomerates of primary particles.

The extruder used in the method is preferably of the non-dewatering type, that is a configuration which is not designed to separate water from the polymer stream. Examples for suitable extruder/screw configurations are co-rotating twin screw extruders and counter-rotating twin screw extruders. Preferably the extruder comprises intermeshing extrusion screws. Extrusion may take place through one or more of nozzles present on the extruder.

In its second heating curve the polymer of the polymer starting material shall have a highest end temperature T_{ef} for a phase transition of ≥ -60 °C and ≤ 110 °C. Preferred phase transitions are glass transitions and the melting of the polymer. If a polymer displays more than one phase transition upon heating, such as a glass transition and a melting or two glass transistions, the highest of these values is used when selecting a suitable polymer. Preferred highest values for T_{ef} are ≥ 0 °C and ≤ 100 °C, more preferred ≥ 20 °C and ≤ 90 °C, most preferred ≥ 30 °C and ≤ 70 °C.

T_{ef} is defined in accordance with DIN EN ISO 11357, in particular reference is made to page 13 of DIN EN ISO 11357-1:2017-02 (EN ISO 11357-1:2016 (E) including Figure 2 "Typical DSC curve (schematic)".

The polymer starting material has a water content of ≥ 3 weight-% to ≤ 35 weight-% based on the total weight of the polymer starting material. It has been found that lower water contents can lead to an undesired decrease in the solution viscosity of the processed polymer and furthermore jeopardize the energy savings of the method according to the invention if a drying step is performed prior to extruding. Higher water contents pose difficulties in efficiently processing the polymer starting material. Preferred water contents are ≥ 5 weight-% to ≤ 25 weight-%, more preferred ≥ 10 weight-% to ≤ 20 weight-%.

The temperature of the extruded polymer material shall be ≥ 30 °C to ≤ 100 °C and is to be understood as the temperature of the material immediately after exiting an extruder nozzle. Any cooling of the material by air and/or water contact is excluded. The temperature can be set using the appropriate settings for heating and energy input of the extruder and easily measured by thermography or other contactless methods. Alternatively, a temperature probe in contact with the extruded material can be used. Preferably the temperature of the extruded material is ≥ 40 °C to ≤ 90 °C, more preferred ≥ 45 °C to ≤ 80 °C.

It is preferred that the temperature of the extruded polymer material closely matches the highest temperature T_{ef} of the polymer. For example, the temperature of the extruded material may differ by at most ± 50 °C or ± 30 °C or ± 20 °C from T_{ef}.

In one embodiment the method further comprises:
c. granulating the extruded polymer material obtained in step b., thereby obtaining a granulated polymer material.

In another embodiment the method further comprises:
d. drying the extruded polymer material obtained in step b. and/or the granulated polymer material obtained in step c.

Drying may occur by heating, dry air treatment and/or the application of vacuum and by vacuum and/or drying extrusion.

It has been found that the extrudate and the granules can be dried more efficiently (less time and less energy for drying needed) than a powdery polymer material of the same water content. This is at least in part due to a better flow of drying air around the particles as opposed to through a poweder bed. The drying may reduce the water content to ≤ 5 weight-%, ≤ 3 weight% or ≤ 1 weight-% if so desired.

In another embodiment of the method the extruded polymer material has a water content of ≥ 50% to ≤ 100% (preferably ≥ 55 % to ≤ 98%, most preferably ≥ 60% to ≤ 95%) of the water content of the polymer material provided in step a.

In another embodiment of the method the extrusion is performed at an extrusion pressure of ≥ 3 bar to ≤ 80 bar. The extrusion pressure may be measured by sensor(s) located at the die head of the extruder in close proximity to the nozzle(s). Preferred extrusion pressures are ≥ 4 bar to < 50 bar and more preferred ≥ 5 bar to ≤ 40 bar.

In another embodiment of the method the diameter of the at least one nozzle of the extruder is ≥ 0,5 mm to ≤ 6 mm. Preferred nozzle diameters are ≥ 1 mm to ≤ 5 mm.

In another embodiment of the method the mass throughput of extruded polymer material through the at least one nozzle of the extruder is ≥ 0,5 kg/h per nozzle to ≤ 100 kg/h per nozzle. Preferred throughputs are ≥ 1 kg/h to ≤ 50 kg/h and more preferred ≥ 2 kg/h per nozzle to ≤ 30 kg/h.

In another embodiment of the method the polymer comprises internally hydrophilizing functional groups and/or the polymer material comprises externally hydrophilizing agents. In another embodiment of the method the polymer is a polyurethane, preferably a thermoplastic polyurethane and more preferred a thermplastic polyester-based polyurethane.

Internally hydrophilized polymers, in particular thermoplastic polyurethanes, are understood to be those which comprise, via a chemical bond, ionic groups and/or non-ionic hydrophilic groups.

The ionic groups may be either cationic or anionic in nature. Compounds that act as cationic, anionic or non-ionic hydrophilizers include those which comprise, for example, sulphonium, ammonium, phosphonium, carboxylate, sulphonate or phosphonate groups or groups which can be converted by salt formation to the aforementioned groups (potentially ionic groups) or polyether groups, and for example can be incorporated into the polyurethanes via isocyanate-reactive groups present.

The neutralizing agents required for salt formation may be added to the salt-forming groups either in a stoichiometric ratio or in excess. To generate anionic groups, organic bases such as tertiary amines or inorganic bases such as alkali metal hydroxides or ammonia are added. In this case, preference is given to using tertiary amines such as triethyl amine, triethanol amine or dimethylethanol amine. Preferred suitable isocyanate-reactive groups are hydroxyl and amine groups.

Preferred non-ionic hydrophilizers are polyoxyalkylene ethers containing at least one hydroxyl or amino group. These polyethers may contain a proportion of 30% by weight to 100% by weight of units derived from ethylene oxide.

Externally hydrophilized polymers, in particular thermoplastic polyurethanes, are understood to be those which have been combined with emulsifiers. Both ionic emulsifiers such as alkali metal and ammonium salts of fatty acids or of aryl(alkyl) sulphonic acids and non-ionic emulsifiers, for example ethoxylated alkyl benzenes with an average molecular weight of 500 g/mol to 10000 g/mol are suitable. Other examples for suitable emulsifiers are AB and ABA block copolymers of polyethylene oxide) and poly(butyl acrylate) or polyethers that have been started on lauryl alcohol.

Combinations of an internally hydrophilized polymer, in particular thermoplastic polyurethane, and external emulsifiers are also possible.

Particularly suitable are linear polyester polyurethanes produced by reaction of a) polyester diols having a molecular weight above 600 and optionally b) diols in the molecular weight range of 62 to 600 g/mol as chain extenders with c) aliphatic diisocyanates, preferably observing an equivalent ratio of hydroxyl groups of components a) and b) to isocyanate groups of component c) of 1:0.9 to 1:0.999, wherein component a) consists to an extent of at least 80% by weight of polyester diols in the molecular weight range of 1000 to 3000 based on (i) adipic acid and/or succinic acid and (ii) glycol and/or 1,3 propanol and/or 1.4-dihydroxybutane, and/or neopentyl glycol.

It is further preferred that component c) comprises IPDI and / or HDI and / or H12MDI . It is also preferred that the alkanediols b) are selected from the group consisting of: 1,2-dihydroxyethane, 1,3-dihydroxypropane, 1,4-dihydroxybutane, 1,5-dihydroxypentane, 1,6-dihydroxyhexane or a combination of at least two of these in an amount of up to 200 hydroxyl equivalent percent based on component a).

The polyurethanes may also comprise urea groups and therefore also be regarded as polyurethane/polyurea compounds.

In another embodiment the method further comprises the steps before step a.:
i. Providing an aqueous dispersion of the polymer;
ii. Coagulating the aqueous dispersion;
iii. Removing water from the coagulate such that a polymer starting material having a water content of ≥ 3 weight-% to ≤ 35 weight-%, based on the total weight of the polymer starting material, is obtained.

Preferably the coagulation step ii. is via freezing and thawing of the dispersion, resulting in the steps:
ii. Storing the dispersion of step i. at a temperature of ≤ 0 °C until a polymer-containing precipitate is formed;
iii. Thawing the precipitate and removing water from the precipitate after thawing such that a polymer starting material having a water content of ≥ 3 weight-% to ≤ 35 weight-%, based on the total weight of the polymer starting material, is obtained.

The aqueous dispersion which is provided in step i. may be based on a commercially available polymer dispersion to which functional additives such as inorganic particles may also have been added. The polymer particles dispersed within the aqueous phase may have an intensity-based harmonic mean particle size of the hydrodynamic diameter (Z-Average), as determined by dynamic light scattering, of ≤ 800 nm. Preferred mean particle sizes are ≥ 10 nm to ≤ 500 nm and more preferred ≥ 20 nm to ≤ 350 nm. The dispersion may also contain customary adjuvants such as emulsifiers. Furthermore, the dispersion may have acids, bases or a buffer system to set the pH value to a desired level. Preferred are pH values of 4 to 10. Lastly, water soluble electrolytes such as metal halogenides, oxides or carbonates may be added to influence electrostatic properties such as the zeta potential of the polymer particles or the inorganic particles.

In step ii. the dispersion is preferably stored at a temperature of 0 °C or less until a precipiate is formed, although other coagulation methods are also possible. This precipitate contains the polymer of the polymer particles. In a simple but efficient manner, step ii. can be conducted by storing drums of polymer dispersion in a walk-in freezer or a commercial cold storage facility.

The removal step iii. serves to remove the bulk of the aqueous phase and to obtain a wet starting material for further handling. Commonly used processes for separating solids from liquids such as filtration may be employed.

### Examples

The present invention will be further described with reference to the following examples without wishing to be bound by them.

### Methods

Unless noted otherwise, all percentages are weight percentages based on the total weight. Phase transitions for the polymers were determined by DSC in accordance with DIN EN ISO 11357 at a heating rate of 20 K/min. T_{ef, g} denotes the point of intersection of the extrapolated end baseline and a tangent drawn at the point of inflection of the step for the glass transition of the polymer. T_{ef,m} denotes the point of intersection of the interpolated virtual baseline and tangent drawn at the point of inflection of the far side of peak for the melting of the polymer.

Residual moisture was determined by a Sartorius MA150 balance (heating temperature 150 °C, abortion criterion: delta 0.1% relative humidity in 60 s). Solution viscosity was measured using a Stabinger viscosimeter 3000/G2. For this purpose the polymeric sample was dissolved in N-Methyl-2-pyrrolidon (0.4 % solution) with the addition of 0.1 % dibutylamine. The melt temperature of the extrudate was determined using a Fluke 52II thermometer. If available, the nozzle pressure was measured with pressure sensors inside of the extruders. Extrusion was performed on the following double screw extruders.

Extruder 1: Co-rotating Coperion twin screw extruder ZSK 18Mc with a barrel diameter of 18.2 mm and a barrel length of 864 mm.

Extruder 2: Co-rotating Coperion twin screw extruder ZSK 32Mc with a barrel diameter of 31.8 mm and a barrel length of 1386 mm.

Extruder 3: Co-rotating Coperion twin screw extruder ZSK 53 with a barrel diameter of 53 mm and a barrel length of 2220 mm.

Extruder 4: Counter-rotating Brabender twin screw extruder 42/8D with a barrel diameter of 42 mm and a barrel length of 320 mm.

### Polymer dispersions

Polymer dispersion A was a crystallizing polyester urethane/urea aqueous dispersion for adhesive applications with a pH of 6.8 with a phase transition temperature T_{ef, g} of the polymer (DSC, 20 K/min) of -50 °C, a phase transition temperature T_{ef,m} of the polymer (DSC, 20 K/min) of 56 °C and a solids content of ca. 50 weight-%.

Polymer dispersion B was a crystallizing polyester urethane/urea aqueous dispersion for adhesive applications with a pH of 6.8 with a phase transition temperature T_{ef,g} of the polymer (DSC, 20 K/min) of -50 °C, a phase transition temperature T_{ef,m} of the polymer (DSC, 20 K/min) of 57 °C and a solids content of ca. 50 weight-%.

Polymer dispersion C was a crystallizing polyester urethane/urea aqueous dispersion for adhesive applications with a pH of 6.8 with a phase transition temperature T_{ef,g} of the polymer (DSC, 20 K/min) of -51 °C, a phase transition temperature T_{ef,m} of the polymer (DSC, 20 K/min) of 55 °C and a solids content of ca. 50 weight-%.

Polymer dispersion D was a crystallizing polyester urethane/urea aqueous dispersion for textile coating applications with a pH of 6.8, with a phase transition temperature T_{ef,g} of the polymer (DSC, 20 K/min) of-45 °C, a phase transition temperature T_{ef,m} of the polymer (DSC, 20 K/min) of 112 °C and a solids content of ca. 40 weight-%.

The polymers of dispersions A, B, and C were linear polyester polyurethanes having terminal hydroxyl groups produced by reaction of a) polyester diols and b) diol and/or hydrophilic amine chain extenters with c) aliphatic diisocyanates. The component a) comprised a polyester diol in the molecular weight range of 1500 to 3000 g/mol, in the component b) the diol was 1,4-dihydroxybutane, the hydrophilic amine chain extender was sodium-2-[(2-aminoethyl)amino]ethansulfonate and the component c) was HDI and IPDI.

The polymer of dispersion D was a linear polyester polyurethane having terminal hydroxyl groups produced by reaction of a) polyester diols and b) diol and/or hydrophilic amine chain extenters with c) aliphatic diisocyanates. The component a) comprised a polyester diol in the molecular weight range of ≤ 900 g/mol, in the component b) the diol was 1,4-dihydroxybutane, the hydrophilic amine chain extender was sodium-2-[(2-aminoethyl)amino]ethansulfonate and the component c) was HDI.

Particulate polymer starting materials A, B, C and D were obtained from dispersions A, B, C and D respectively, by freezing of a 30 L plastic container of the dispersion at -18 °C for 48 h and thawing at room temperature for 72 h, followed by filtration and sieving the obtained coarse particle slurry of a white polymer crumb in water, thereby obtaining a polymer starting material with a water content between 10 weight-% and 35 weight-%. Extrusion and pelletizing of the starting materials were carried out as described below.

Inventive examples (IE) given in table 1 show extrusions of polymer starting materials with water contents between 13 weight-% and 30 weight-%, resulting in stable extrudates that were pelletized. Nozzle pressures were between 5 bar and 35 bar, throughputs between 3 and 20 kg/h/nozzle and maximum extrusion temperatures at about 60 °C, tested at a variety of extruders.

IE 1: Polymer starting material A, produced as described above, with a residual water content of 15 weight-%, was extruded at a maximum extruder temperature of 54 °C. The melt temperature of the extrudate was about 50 °C and a stable strand was obtained that was pelletized. The solution viscosity only decreased by 0.021 mm²/s, indicating mild processing conditions.

IE 2: Polymer starting material A, produced as described above, with a residual water content of 14 weight-%, was extruded at a maximum extruder temperature of 60 °C. The melt temperature of the extrudate was about 55 °C and a stable strand was obtained that was pelletized. The solution viscosity only decreased by 0.005 mm²/s, indicating mild processing conditions.

IE 3: Polymer starting material A, produced as described above, with a residual water content of 20 weight-%, was extruded at a maximum extruder temperature of 60 °C. The melt temperature of the extrudate was about 55 °C and a stable strand was obtained that was pelletized. The solution viscosity only decreased by 0.009 mm²/s, indicating mild processing conditions.

IE 4: Polymer starting material B, produced as described above, with a residual water content of 12 weight-%, was extruded at a maximum extruder temperature of 60 °C. The melt temperature of the extrudate was about 55 °C and a stable strand was obtained that was pelletized. The solution viscosity only decreased by 0.001 mm²/s, indicating mild processing conditions.

### Comparative examples:

CE 1: Polymer starting material C, produced as described above, with a residual water content of 32 weight-%, was extruded at a maximum extruder temperature of 140 °C. The melt temperature was ≥ 100 °C. Due to the evaporation of water the polymer shot out of the extruder in pulses. No stable extrudate was obtained that could be pelletized.

CE 2: Polymer starting material C, produced as described above, with a residual water content of 20 weight-%, was extruded at a maximum extruder temperature of 190 °C. The melt temperature was ≥ 100 °C. Due to the evaporation of water the polymer shot out of the extruder in pulses. No stable extrudate was obtained that could be pelletized.

CE 3: Polymer starting material B, produced as described above, with a residual water content of 12 weight-%, was extruded at a maximum extruder temperature of 120 °C. Due to the evaporation of water the polymer shot out of the extruder in pulses. No stable extrudate was obtained that could be pelletized. Solution viscosity (SV) was measured and a drop in SV by 0.031 mm²/s was determined.

CE 4: Polymer B was produced as described above. However it was further dried at room temperature to a residual water content of < 1 weight-% before extrusion was performed at a maximum extrusion temperature of 180 °C. A stable strand was obtained (visual obervation). Solution viscosity was measured and a drop in SV by 0.049 mm²/s was determined. This drop in SV is in stark contrast to the examples according to the invention, in particular IE4, where no such reduction was observed.

CE 5: Polymer D, produced as described above, with a residual water content of 14 weight-% was extruded at a maximum extruder temperature of 90 °C. The extruder stopped due to a critical increase in torque. No stable extrudate was obtained that could be pelletized.

**Table 1. Inventive examples (IE).**

| | **IE 1** | **IE 2** | **IE 3** | **IE 4** |
|---|---|---|---|---|
| **Polymer starting material** | A | A | A | B |
| **T_{ef,g} / °C** | -50 | -50 | -50 | -50 |
| **T_{ef,m}/°C** | 56 | 56 | 56 | 57 |
| **Water content before extruder / %** | 15 | 14 | 20 | 12 |
| **Water content after extruder / %** | 11 | 13 | 14 | 11 |
| **Maximum extrusion temperature / °C** | 54 | 60 | 60 | 60 |
| **Extrusion pressure / bar** | n.d. | 5 | 35 | n.d. |
| **Throughput / kg/h/nozzle** | 3 | 20 | 6 | 3 |
| **Stable strand production** | Yes | Yes | Yes | Yes |
| **Material temperature after extruder / °C** | 50 | 55 | 55 | 55 |
| **Nozzle diameter / mm** | 4 | 3.8 | 4 | 4 |
| **Extruder No.** | 4 | 3 | 2 | 4 |
| **Solution viscosity before extrusion / mm²/s** | 1.412 | 1.248 | 1.294 | 1.314 |
| **Solution viscosity after extrusion** / **mm²/s** | 1.391 | 1.243 | 1.285 | 1.313 |

**Table 2. Counter-examples (CE).**

| | **CE 1** | **CE 2** | **CE 3** | **CE 4** | **CE 5** |
|---|---|---|---|---|---|
| **Polymer starting material** | C | C | B | B | D |
| **T_{ef,g} / °C** | -51 | -51 | -50 | -50 | -45 |
| **T_{ef,m} / °C** | 55 | 55 | 57 | 57 | 112 |
| **Water content before extruder / %** | 32 | 20 | 12 | < 1 | 14 |
| **Water content after extruder / %** | < 1.6 | < 1.4 | 6 | < 1 | n.d. |
| **Maximum Extrusion temperature / °C** | 140 | 190 | 120 | 180 | 90 |
| **Extrusion pressure / bar** | 2 | 5 | n.d. | n.d. | n.d. |
| **Throughput / kg/h/nozzle** | 3 | 8 | 3 | 3 | n.d. |
| **Stable strand production** | No | No | No | Yes | No |
| **Material temperature after extruder / °C** | > 150 | 155 | > 100 | > 100 | n.d. |
| **Nozzle diameter / mm** | 3 | 3 | 4 | 4 | 4 |
| **Extruder No.** | 1 | 1 | 4 | 4 | 4 |
| **Solution viscosity before extrusion / mm²/s** | n.d. | n.d. | 1.314 | 1.354 | n.d. |
| **Solution viscosity after extrusion** / **mm²/s** | n.d. | n.d | 1.283 | 1.302 | n.d. |

## Claims

1. A method for extruding a polymer comprising the steps:
a. providing, in an extruder, a particulate polymer starting material, the particulate polymer starting material comprising a polymer and water;
b. extruding, using the extruder, the provided polymer starting material through at least one nozzle of the extruder, thereby obtaining an extruded polymer material;
**characterized in that**
the polymer of the polymer starting material is selected such that in a second heating curve of a differential scanning calorimetry measurement of the polymer, the measurement being according to DIN EN ISO 11357 and at a heating rate of 20 K/min, the highest end temperature T_{ef} for a phase transition of the polymer is ≥ -60 °C and < 110 °C,
T_{ef} being defined in accordance with DIN EN ISO 11357:
for a peak of the curve as the point of intersection of the interpolated virtual baseline and tangent drawn at the point of inflection of the far side of peak and
for a step of the curve as the point of intersection of the extrapolated end baseline and a tangent drawn at the point of inflection of the step,
the provided polymer starting material has a water content of ≥ 3 weight-% to ≤ 35 weight-% based on the total weight of the polymer starting material and
the temperature of the extruded polymer material is ≥ 30 °C to ≤ 100 °C.

2. The method of claim 1, further comprising:
c. granulating the extruded polymer material obtained in step b., thereby obtaining a granulated polymer material.

3. The method of claim 1 or 2, further comprising:
d. drying the extruded polymer material obtained in step b. and/or the granulated polymer material obtained in step c.

4. The method of one of the preceding claims, wherein the extruded polymer material has a water content of ≥ 50% to ≤ 100% of the water content of the polymer material provided in step a.

5. The method of one of the preceding claims, wherein the extrusion is performed at an extrusion pressure of ≥ 3 bar to ≤ 80 bar.

6. The method of one of the preceding claims, wherein the diameter of the at least one nozzle of the extruder is ≥ 0,5 mm to ≤ 6 mm.

7. The method of one of the preceding claims, wherein the mass throughput of extruded polymer material through the at least one nozzle of the extruder is ≥ 1 kg/h per nozzle to ≤ 100 kg/h per nozzle.

8. The method according to one of the preceding claims, wherein the polymer comprises internally hydrophilizing functional groups and/or the polymer material comprises externally hydrophilizing agents.

9. The method according to one of the preceding claims, wherein the polymer is a polyurethane.

10. The method according to one of the preceding claims, further comprising the steps before step a.:
i. Providing an aqueous dispersion of the polymer;
ii. Coagulating the aqueous dispersion;
iii. Removing water from the coagulate such that a polymer starting material having a water content of ≥ 3 weight-% to ≤ 35 weight-%, based on the total weight of the polymer starting material, is obtained.
